# FASCICULE DE BREVET EUROPEEN

(11) **EP 0 675 022 B1**
(45) Date de publication et mention de la délivrance du brevet: **14.10.1998**
(21) Numéro de dépôt: 95400706.8
(22) Date de dépôt: 29.03.1995
(51) Int. Cl.: B60Q 1/42

(54) **Commutateur électrique pour l'alimentation des indicateurs de changement de direction d'un véhicule automobile**
Elektrischer Schalter für Fahrtrichtungsanzeige eines Fahrzeugs
Electrical switch for the power supply of the direction indicators of an automotive vehicle

(30) Priorité: 31.03.1994 FR 9403837
(43) Date de publication de la demande: 04.10.1995
(73) Titulaire: MAGNETI MARELLI FRANCE, 92000 Nanterre (FR)
(72) Inventeur: Gauthier, Christian, F-92200 Neuilly sur Seine (FR)
(74) Mandataire: Texier, Christian

(56) Documents cités:
- DE-A- 2 515 754
- DE-A- 3 502 651
- DE-A- 3 510 714
- FR-A- 2 246 171
- FR-A- 2 607 961

## Description

La présente invention concerne le domaine des commutateurs électriques conçus pour l'alimentation des indicateurs de changement de direction d'un véhicule automobile.

La présente invention a pour but de perfectionner les moyens de commande, intégrés à ces commutateurs, assurant le retour automatique de ceux-ci en position de repos, lorsque le volant est tourné dans un sens de rappel approprié.

On a déjà proposé de nombreux moyens de commande assurant le retour automatique en position de repos des commutateurs conçus pour l'alimentation des indicateurs de changement de direction.

Un premier mode connu de réalisation de ces moyens de commande selon le préambule de la revendication 1 est représenté dans les documents FR-A-2515865 et FR-A-2607961. Ce premier mode de réalisation connu est illustré sur les figures 1 à 4 annexées qui représentent respectivement, figures 1 et 2 : deux vues en coupe orthogonales entre elles d'un commutateur connu, figure 3 : une vue en plan d'un coulisseau de forçage et figure 4 : une vue en plan d'un équipage porte-contact.

Selon ce premier mode de réalisation, les moyens de commande comprennent un équipage porte-contact 10 associé à un système d'indexation 12, un doigt de rappel 20, deux ressorts de traction symétriques 21, 22, un coulisseau de forçage 30 et un ressort de forçage 32. Le système d'indexation 12 définit, pour l'équipage porte-contact 10, une position de repos, une position stable d'alimentation et une position instable d'alimentation prévue entre la position de repos et la position stable. L'équipage porte-contact 10 est muni d'une découpe 14 délimitée par une bordure 15 en forme de "W". Le coulisseau de forçage 30 est muni d'une lumière oblongue 31, radiale par rapport à l'axe de l'arbre de direction. Le doigt de rappel 20 porte deux tourillons opposés 23, 24 engagés respectivement dans la découpe 14 et la lumière 31. Les ressorts de traction 21, 22 sollicitent le doigt de rappel 20 vers une came de contrôle portée par l'arbre de direction. Cependant, en position de repos, lorsqu'aucun des indicateurs de changement de direction n'est alimenté, l'un des tourillons 23 reposent contre la pointe centrale 16 de la découpe 15 en "W", et le doigt 20 est éloigné de la came de contrôle. En position stable d'alimentation lorsque l'équipage porte-contact 10 est pivoté et l'un des indicateurs de changement de direction est alimenté, les tourillons 23, 24 se déplacent radialement dans la découpe 14 et la lumière 31, en rapprochement de l'arbre : le doigt 20 vient dans le secteur de déplacement de la came de contrôle. Dans un sens de rotation de l'arbre, la came de contrôle fait pivoter le doigt 20 autour de l'axe des tourillons 23, 24, sans agir sur l'équipage porte-contact 10. Dans l'autre sens de rotation, la came de contrôle entraîne le doigt 20 pour ramener l'équipage porte-contact 10 en position de repos. Le coulisseau 30 et le ressort de forçage 32 évitent toute détérioration du dispositif lorsque le conducteur maintient le commutateur en position d'alimentation alors que la rotation de l'arbre de direction tend à ramener le commutateur en position de repos.

Un deuxième mode connu de réalisation des moyens de commande est représenté dans le document US-A-4393280. Selon ce second mode de réalisation, les moyens de commande comprennent un équipage porte-contact qui entoure l'arbre de direction, une came portée par l'équipage à l'opposé du levier de commande par rapport à l'arbre de direction, pour coopérer avec la came de contrôle portée par ce dernier, et un ressort intercalé entre la came et l'équipage porte-contact.

Un troisième mode connu de réaliation des moyens de commande est représenté dans le document FR-A-2076682. Selon ce troisième mode de réalisation, les moyens de commande comprennent au moins un galet apte à rouler avec friction contre l'arbre de direction, un pignon solidaire du galet, un secteur denté apte à venir en prise avec le pignon lorsqu'un levier de commande associé est pivoté et un ressort en prise avec le secteur denté.

Un quatrième mode de réalisation des moyens de commande est représenté dans le document US-A-4315117. Selon ce quatrième mode de réalisation les moyens de commande comprennent un équipage circulaire porté à rotation sur une platine support et pourvu de deux crans concaves périphériques, un étrier de blocage qui repose contre l'équipage, un levier porté à pivotement sur l'étrier et un ressort de traction intercalé entre l'équipage et le levier. Lorsque l'équipage est déplacé en position de travail pour alimenter l'un des indicateurs de changement de direction, l'étrier de blocage pénètre dans l'un des crans concaves. L'équipage est ramené en position de repos lorsque l'arbre de direction est entrainé dans un sens approprié et que la came de contrôle déplace le levier dans un sens tendant à solliciter l'étrier vers l'extérieur du cran concave précité.

Un cinquième mode de réalisation des moyens de commande est représenté dans le document DE-A-3430664. Selon ce cinquième mode de réalisation, les moyens de commande comprennent un équipage associé au levier de commande et porté à pivotement sur une platine support, une came portée à pivotement sur l'équipage, qui coopère avec la came de contrôle portée par l'arbre de direction, et un ressort intercalé entre la came et l'équipage pour solliciter la came vers une position de repos par rapport à la came de contrôle.

D'autres modes de réalisation de moyens de commande connus conçus pour assurer le retour automatique en position de repos des moyens d'alimentation des indicateurs de changement de direction sont décrits dans les documents US-A-4739131, US-A-4880945, FR-A-2199708, FR-A-2246171, FR-A-2326310, DE-A-2201157, DE-A-2515754, DE-A-2528681, DE-A-1037886, FR-A-2297750, FR-A-2191235, US-A-4335284.

Le document DE-A-3502651 décrit une autre structure de commutateur électrique comprenant un boîtier, un équipage porte-contact monté à déplacement dans le boîtier, un doigt de rappel monté à pivotement sur le boîtier et un élément assimilable à un coulisseau de forçage monté à pivotement sur l'équipage porte-contact sélectivement autour de deux axes symétriques par rapport à un plan médian du coulisseau au repos. Dans cette structure, le pivotement du coulisseau de forçage ne peut déplacer le point du pivotement du doigt de rappel.

Les moyens de commande jusqu'ici proposés, bien qu'ayant rendu déjà de grands services, présentent différents inconvénients. D'une façon générale, ils exigent des structures de pièce assez complexes et/ou présentent un encombrement non négligeable et/ou ne donnent pas pleinement satisfaction au niveau de la fiabilité.

La présente invention a pour but de perfectionner les moyens de commande jusqu'ici proposés.

Un but particulier de la présente invention est de proposer de nouveaux moyens de commande qui ne génèrent pas d'effort résistant croissant lors de la sollicitation d'un coulisseau de forçage, contrairement aux systèmes antérieurs.

Un autre but particulier de la présente invention est de proposer de nouveaux moyens de commande qui présentent un faible encombrement.

Un autre but particulier de la présente invention est de proposer de nouveaux moyens de commande qui soient plus simples que les dispositifs antérieurement proposés, notamment qui n'exigent pas la réalisation de pièces de structure complexes, pour être de ce fait, entre autres, plus fiables et plus économiques.

Ces différents buts sont atteints selon la présente invention grâce à un commutateur électrique pour l'alimentation des indicateurs de changement de direction d'un véhicule automobile, du type connu en soi comprenant un équipage porte-contact associé à un système d'indexation définissant une position de repos et au moins une position stable d'alimentation, un doigt de rappel associé à des moyens élastiques déplacé par ceux-ci contre une surface de contrôle de l'équipage entre une position de repos - en position de repos de l'équipage - dans laquelle le doigt de rappel n'interfère pas avec une came liée à l'arbre de direction et une position de travail - en position de travail de l'équipage - dans laquelle le doigt de rappel interfère avec la came, de sorte que le doigt de rappel peut sélectivement provoquer le retour de l'équipage porte-contact en position de repos lorsqu'il est lui-même sollicité par la came, et un coulisseau de forçage sur lequel le doigt est monté à pivotement et qui est conçu pour déplacer le point de pivotement du doigt lorsque simultanément la came sollicite le doigt et l'équipage est maintenu en position de travail,
caractérisé par le fait que le coulisseau de forçage est monté à pivotement sélectivement autour de deux axes symétriques par rapport à un plan médian du coulisseau au repos.

Selon une caractéristique avantageuse de l'invention, le plan médian précité passe par l'axe de la colonne de direction et par l'axe de pivotement de l'équipage porte-contact.

Selon une autre caractéristique avantageuse de l'invention, le plan médian précité passe par l'axe de pivotement du doigt de rappel sur le coulisseau de forçage, en position de repos de ce dernier.

Selon une autre caractéristique avantageuse de l'invention, les axes de pivotement du coulisseau de forçage sont choisis pour générer une élévation du couple moteur, lorsque le coulisseau de forçage est sollicité à pivotement, avantageusement par augmentation de la longueur du bras de levier de ce couple moteur.

Selon une autre caractéristique avantageuse de l'invention, les axes de pivotement du coulisseau de forçage sont choisis pour entraîner une réduction du couple résistant lors de la sollicitation du coulisseau de forçage, avantageusement par réduction du bras de levier de ce couple résistant.

D'autres caractéristiques, buts et avantages de la présente invention apparaîtront à la lecture de la description détaillée qui va suivre, et en regard des dessins annexés donnés à titre d'exemple non limitatif et sur lesquels :

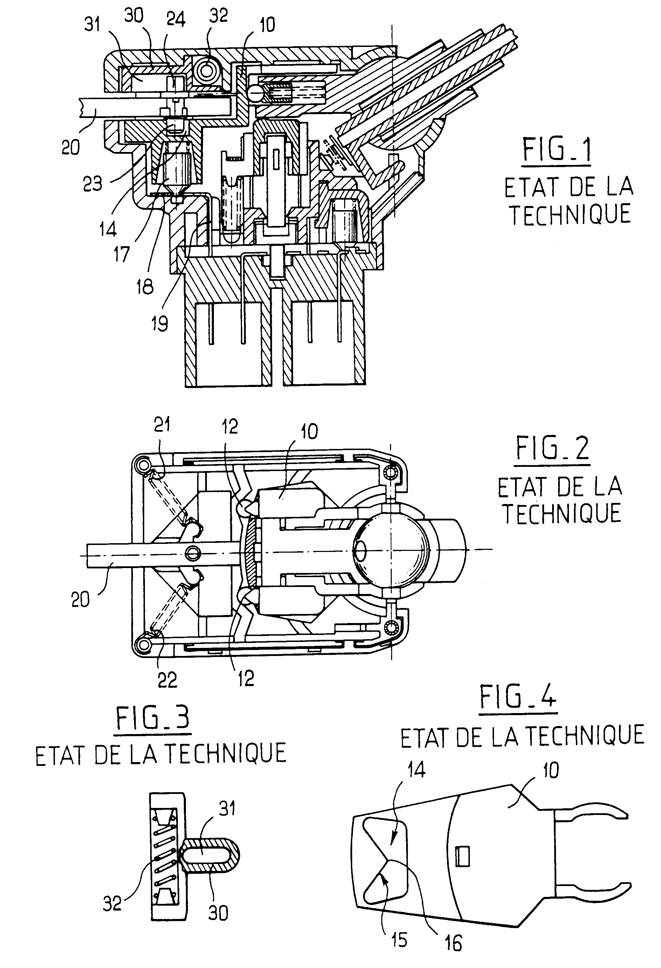

- les figures 1 à 4 précédemment décrites représentent un commutateur électrique conforme à l'état de la technique, plus précisément les figures 1 et 2 représentent deux vues en coupe orthogonales entre elles d'un commutateur connu, la figure 3 représente une vue en plan d'un coulisseau de forçage classique et la figure 4 représente une vue en plan d'un équipage porte-contact classique,

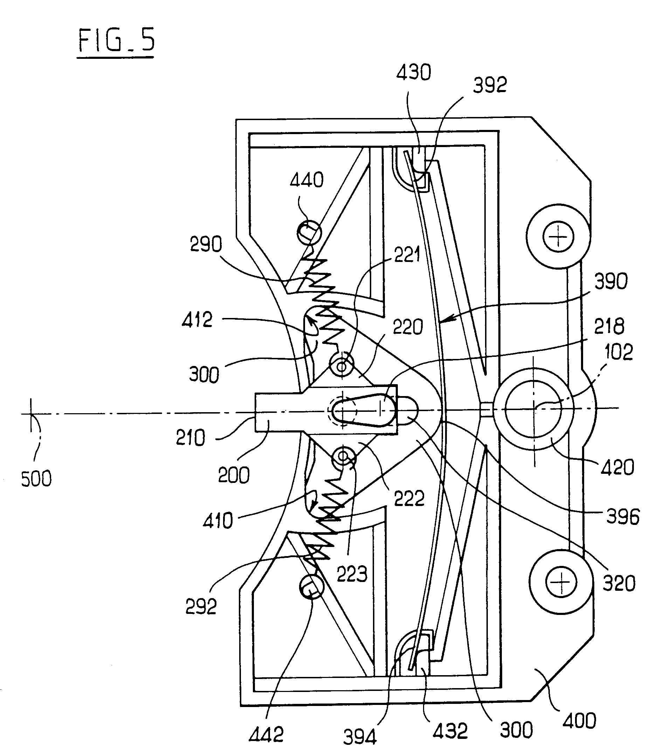

- la figure 5 représente une première vue schématique selon un plan de coupe transversal à l'axe de pivotement de l'équipage porte-contact, des moyens de commande conformes à l'invention ; plus précisément sur la figure 5, l'équipage porte-contact a été retiré pour simplifier l'illustration et on aperçoit par conséquent sur cette figure un chassis support, un doigt de rappel, un coulisseau de forçage et les moyens élastiques associés à ceux-ci,

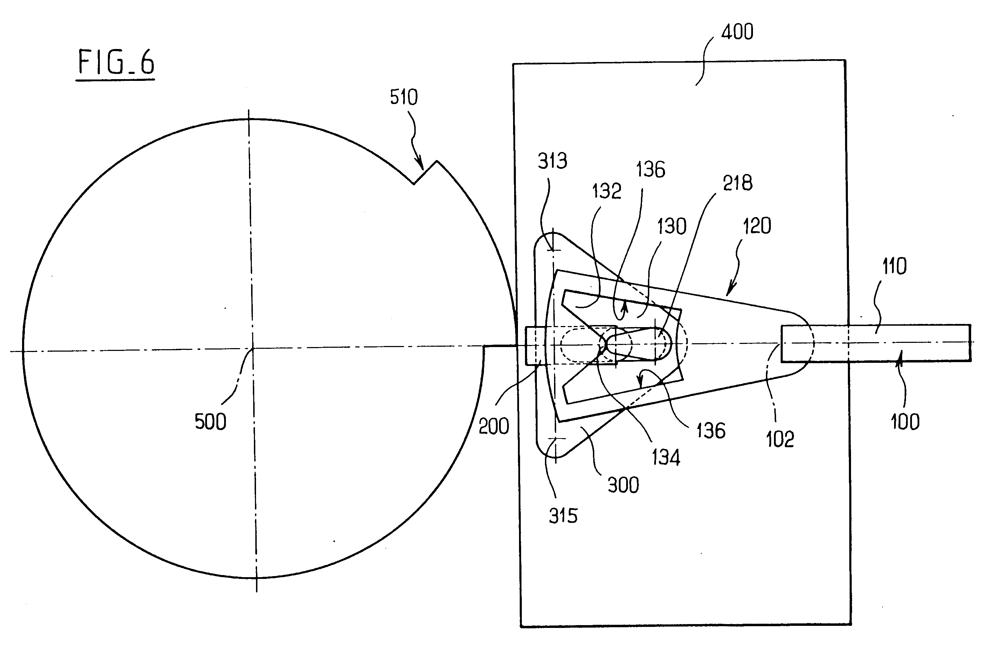

- la figure 6 représente une vue similaire des mêmes moyens de commande, en position de repos, la figure 6 illustrant en outre l'équipage porte-contact et une came liée à l'arbre de direction,

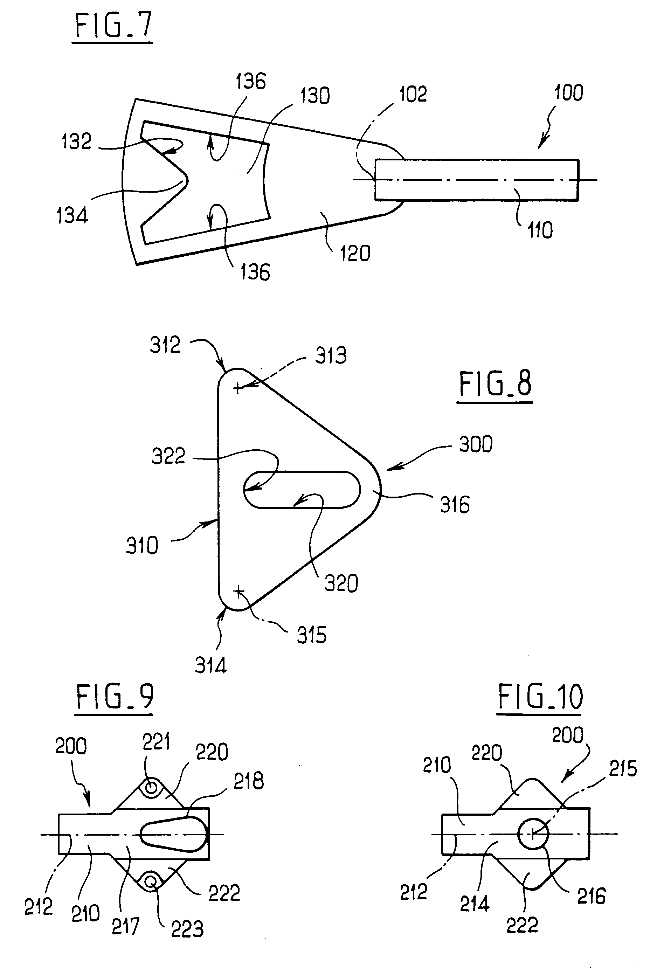

- la figure 7 représente une vue schématique en plan du seul équipage porte-contact,
- la figure 8 représente une vue en plan du seul coulisseau de forçage,
- les figures 9 et 10 représentent deux vues opposées du doigt de rappel conforme à l'invention,

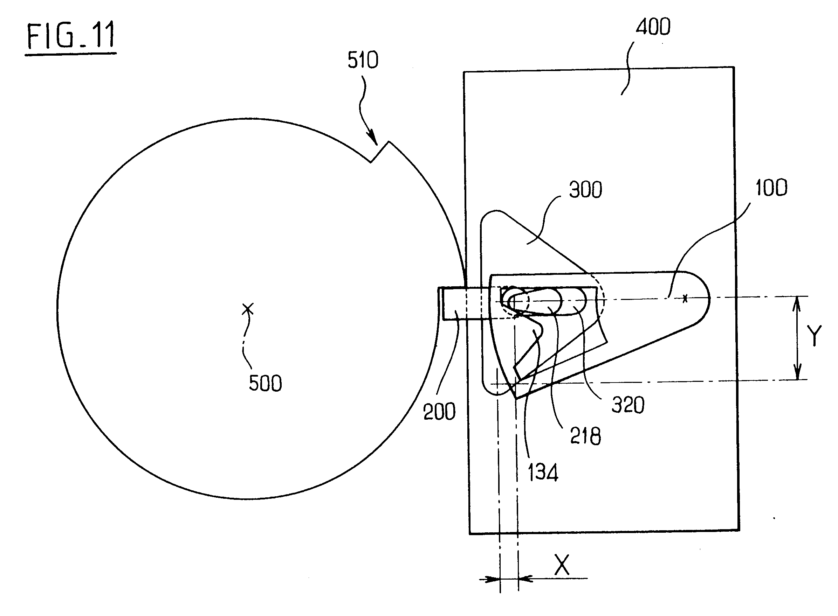

- la figure 11 représente une vue similaire à la figure 6, dans une position de sollicitation du doigt de rappel par la came liée à l'arbre de direction, et

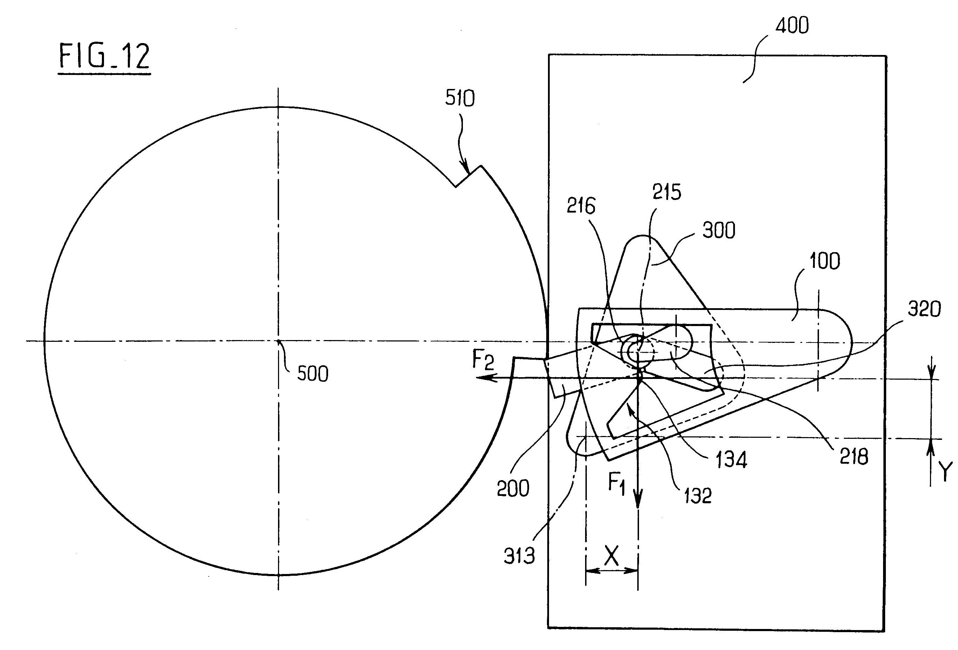

- la figure 12 représente une vue similaire des moyens de commande conformes à la présente invention, en position de sollicitation du coulisseau de forçage.

La structure de commutateur pour l'alimentation des indicateurs de changement de direction d'un véhicule automobile, conforme à la présente invention, comprend principalement :
- un équipage porte-contact 100,
- un doigt de rappel 200,
- des moyens élastiques 290, 292 associés au doigt de rappel 200,
- un coulisseau de forçage 300,
- des moyens élastiques 390 associés au coulisseau de forçage 300, et
- un chassis support 400.

Le chassis support 400 peut faire l'objet de nombreuses variantes de réalisation. Pour cette raison, il ne sera pas décrit dans le détail par la suite.

On notera simplement que de préférence, le chassis support 400 est formé par moulage en matière plastique et est constitué d'un élément du boîtier de commutateur.

L'équipage porte-contact 100 est monté à pivotement sur le chassis support 400 autour d'un axe 102. Cet axe est perpendiculaire aux plans des figures 5, 6, 11 et 12. Il s'étend par ailleurs parallèlement à l'axe 500 de l'arbre de direction.

Sur les figures annexées, l'arbre et la colonne de direction centrés sur l'axe 500 ne sont pas représentés dans le détail.

Cependant, on aperçoit sur les figures 6, 11 et 12 la came 510 liée à l'arbre de direction et conçue pour coopérer avec le doigt de rappel 200 afin de provoquer le retour en position de repos de l'équipage porte-contact, c'est-à-dire l'interruption de l'alimentation des indicateurs de changement de direction, lorsque le volant lié à l'arbre de direction est tourné dans un sens approprié.

Une telle came 510 est bien connue en soi de l'homme de l'art et ne sera donc pas décrite dans le détail par la suite.

L'équipage porte-contact 100 est associé à un système d'indexation connu en soi et non représenté sur les figures annexées, pour simplifier l'illustration.

On rappelle cependant que de préférence et de façon classique, ces moyens d'indexation définissent, pour l'équipage porte-contact 100, une position de repos dans laquelle les indicateurs de changement de direction ne sont pas alimentés, une position stable d'alimentation et une position instable d'alimentation prévue entre la position de repos et la position stable.

L'alimentation des indicateurs de changement de direction en position stable et en position instable d'alimentation de l'équipage porte-contact 100 peut être obtenue à l'aide de nombreuses dispositions connues de l'homme de l'art. A titre d'exemple, l'équipage porte-contact peut solliciter des lames élastiques assurant la fermeture du circuit d'alimentation des indicateurs de changement de direction. Selon une autre variante, comme représenté sur la figure 1 pour l'état de la technique, l'équipage porte-contact peut supporter au moins un plot électriquement conducteur 17 déplacé en regard de paires de lamelles électriquement conductrices 18, 19 portées par le boîtier, afin de relier sélectivement celles-ci en position stable ou instable d'alimentation.

En pratique, l'équipage porte-contact 100 comprend de préférence une partie de levier 110 et un secteur 120 diamétralement opposés par rapport à l'axe de pivotement 102.

Le levier 110 est accessible à l'extérieur du boîtier 400. Il est conçu pour être manipulé par un utilisateur afin de provoquer le pivotement de l'équipage 100 autour de l'axe 102.

Le secteur 120 excentré par rapport à l'axe 102 comprend une découpe 130 délimitée par une bordure en W 132. Celle-ci est symétrique par rapport à un plan passant par l'axe de pivotement 102. La pointe 134 de cette forme en W est dirigée vers l'axe 102.

Le coulisseau de forçage 300 a de préférence un contour généralement triangulaire. Sa base 310 est de préférence généralement plane comme on le voit sur les figures 6 et suivantes, ou incurvée, concave vers l'extérieur, comme représenté en variante sur la figure 5.

En position de repos du commutateur, cette base 310 s'étend transversalement à un plan passant par l'axe 102 de pivotement de l'équipage 100, l'axe 500 de l'arbre de direction et la pointe 134 de la forme 132 précitée.

Le coulisseau de forçage 300 possède une lumière oblongue 320. Cette lumière 320 s'étend radialement, au repos, par rapport à l'axe de pivotement 102.

Le plan médian longitudinal de la lumière 320 coïncide au repos avec le plan passant par l'axe de pivotement 102 de l'équipage 100 et l'axe 500 de l'arbre de direction.

Le chassis support 400 possède deux structures 410, 412, incurvées, concaves dirigées vers l'axe de pivotement 102 et symétriques par rapport au plan passant par l'axe 102 et l'axe 500. Ces deux structures 410, 412 sont conçues pour servir d'appui aux angles du coulisseau de forçage 300 qui coïncident avec les extrémités de la base précitée 310, comme on le voit sur la figure 5. Plus précisément, ces angles 312, 314 du coulisseau de forçage 300 sont de préférence arrondis sous forme de calottes cylindriques centrées sur des axes 313 et 315 parallèles aux axes 102 et 500 précités. Par ailleurs, les structures d'appui 410, 412 formées sur le boîtier 500 sont de préférence formées de calottes cylindriques de même rayon que les angles 312, 314 du coulisseau de forçage 300.

L'homme de l'art comprendra aisément que de ce fait, les structures d'appui 410, 412 peuvent servir d'articulation au coulisseau 300, respectivement autour des axes 313 et 315, si un couple de pivotement est appliqué à ce coulisseau.

On notera que l'on distingue également sur la figure 5 un fourreau 420 venu de moulage avec le boîtier 400, et centré sur l'axe 102, pour servir de guidage à pivotement à l'équipage mobile 100.

Le coulisseau de forçage 300 est sollicité en appui contre les structures 410 et 412 par les moyens élastiques 390.

De préférence, ces moyens élastiques 390 sont formés d'une lame élastique placée entre le coulisseau 300 et l'axe 102. Cette lame élastique 390 s'étend essentiellement perpendiculairement au plan passant par les axes 102 et 500.

Plus précisément, la lame ressort 390 est légèrement incurvée, concave vers le coulisseau 300, de sorte qu'elle est bandée en permanence. La lame élastique 390 repose par ses extrémités 392, 394 sur des structures d'appui appropriées 430, 432 formées sur le boîtier 400. La lame élastique 390 repose également, en son point milieu 396 sur le sommet 316 du coulisseau de forçage 300 opposé à la base 310.

Le secteur 120 de l'équipage 100 est superposé au coulisseau de forçage 300.

Par ailleurs, le doigt de rappel 200 est placé entre le coulisseau 300 et le secteur 120 de l'équipage 100.

Le doigt de rappel 200 comprend un fût 210 allongé, par exemple de section carré ou rectangulaire. Le fût 210 est centré sur un axe 212 qui coïncide au repos avec un plan passant par les axes 102 et 500.

Sur une première face 214 visible sur la figure 10, le fût 210 possède un tourillon 216. Le tourillon 216 est centré sur un axe perpendiculaire à la face précitée 214. Il possède avantageusement une enveloppe cylindrique de révolution. Le tourillon 216 est adapté pour être engagé dans la lumière 320 du coulisseau de forçage 300, libre de coulissement selon la longueur de celle-ci.

Le diamètre du tourillon 216 est donc à cet effet légèrement inférieur à la largeur de la lumière 320.

Sur une seconde face opposée 217 visible sur les figures 5, 6, 9, 11 et 12, le fût 210 possède une structure en saillie 218. Cette structure 218 peut être formée d'un tourillon d'enveloppe cylindrique de révolution comme le tourillon 216. Cependant, de préférence, la structure 218 est formée d'une protubérance de section droite généralement oblongue, effilée en direction de l'extrémité libre du fût 210 adjacente à la came 510.

Cette structure 218 est centrée au repos par rapport à un plan de symétrie du doigt 200 qui coïncide avec un plan passant par les axes 102 et 500.

Le doigt de rappel 200 est en outre muni de deux oreilles 220, 222 en saillie sur les faces latérales du doigt 200. Ces saillies 220, 222 sont munies chacune de structures 221, 223 conçues pour assurer l'accrochage des moyens élastiques 290,292.

Plus précisément encore, ces moyens élastiques 290, 292 sont de préférence formés de ressorts hélicoïdaux dont une première extrémité est fixée sur les moyens d'accrochage précités 221, 223 du doigt 200 et la seconde extrémité est fixée sur des points d'accrochage 440, 442 prévus sur le boîtier 400.

Ces points d'accrochage 440, 442 sont prévus à proximité de la face du boîtier adjacente à la came 510 de sorte que les ressorts 290, 292 travaillent en extension et sollicitent en permanence le doigt de rappel 200 vers l'axe 500 de l'arbre de direction, soit en éloignement de l'axe de pivotement 102 de l'équipage 100.

Cependant, en position de repos, comme illustré sur la figure 6, le tourillon 218 repose sur le sommet 134 de la découpe prévue sur le secteur 120 de l'équipage porte-contact. De ce fait, le déplacement du doigt de rappel 200 vers l'axe 500 est limité par l'équipage porte-contact 100 et le doigt de rappel 200 n'interfère pas avec le trajet de déplacement de la came 510, comme on le voit sur la figure 6.

En revanche, lorsque, comme représenté sur la figure 11, l'équipage porte-contact 100 est déplacé en position de travail par pivotement autour de l'axe 102, en position stable, le tourillon 218 est placé en regard d'un creux de la découpe en W 130. Les ressorts 290, 292 peuvent alors déplacer le doigt 200 en rapprochement de l'axe 500. Dans cette position, comme illustré sur la figure 11, l'extrémité du doigt de rappel 200 interfère avec le trajet de déplacement de la came 510.

Pour expliquer le fonctionnement des moyens de commande précédemment décrit, on va supposer tout d'abord qu'après avoir été déplacé en position de travail stable, l'équipage porte-contact 100 n'est plus sollicité par l'utilisateur. Dans ce cas, le coulisseau de forçage 300 reste immobile.

Ce premier cas peut correspondre à deux hypothèses quant au pivotement de la came 510 : première hypothèse, la came 510 est entraînée par l'intermédiaire du volant et de l'arbre de direction dans le sens des aiguilles d'une montre par rapport aux illustrations des figures annexées, et seconde hypothèse, la came 510 est au contraire entraînée dans le sens inverse des aiguilles d'une montre.

On va tout d'abord aborder la première hypothèse. Si la came 510 est entraînée dans le sens des aiguilles d'une montre par rapport à l'illustration donnée sur les figures annexées, le coulisseau de forçage 300 étant maintenu en appui contre les structures 410, 412 par la lame ressort 390, l'axe 215 du tourillon 216 qui repose contre l'extrémité avant 322 de la lumière 320 est fixe et sert donc d'axe de pivotement stable au doigt de rappel 200.

De ce fait, la sollicitation du doigt 200 par la came 510, comme on le voit sur la figure 11 entraîne l'application sur le doigt 200 d'un couple de pivotement autour de l'axe 215, dans le sens contraire des aiguilles d'une montre.

Le tourillon 218 prend appui à son tour sur le flanc 136 de la découpe 130 formée dans l'équipage porte-contact 100 de sorte qu'un couple de rappel est appliqué sur l'équipage porte-contact 100, par rapport à l'axe de pivotement 102, dans le sens des aiguilles d'une montre. Ce couple moteur appliqué à l'équipage 100 étant supérieur à l'effort de maintien assuré par les moyens d'indexation liés à l'équipage porte-contact 100, ce dernier est ramené automatiquement par le doigt de rappel 200 en position de repos stable comme illustré sur la figure 6. Au cours de ce retour de l'équipage porte-contact, le tourillon 218 glisse sur les flancs du sommet 134 de la découpe 130, de sorte que le doigt 200 recule à l'encontre de l'effort exercé par les ressorts 290, 292 et se retire du trajet de déplacement de la came 510.

Dans la seconde hypothèse, la came 510 est entraînée au contraire dans le sens inverse des aiguilles d'une montre.

Dans cette hypothèse le doigt 200, lorsqu'il est sollicité par la came 510, pivote en sens inverse (soit dans le sens des aiguilles d'une montre). Le tourillon 218 peut alors se déplacer librement dans la découpe 130, par pivotement autour de l'axe 215. Le pivotement du doigt de rappel 200 est alors sans effet sur l'équipage 100 qui reste en position d'alimentation stable.

Le second cas de fonctionnement correspond à celui où par contre l'utilisateur maintient le levier 110 en position de travail, lorsque le doigt 200 est sollicité par la came 510.

Un tel cas peut survenir par exemple lorsque le conducteur opère une manoeuvre pour parquer son véhicule.

Bien entendu, dans ce second cas, le fonctionnement reste identique à celui décrit précédemment si la came 510 est déplacée dans le sens contraire aux aiguilles d'une montre.

En revanche, si la came 510 est alors déplacée dans le sens des aiguilles d'une montre, et que l'équipage porte contact 100 est maintenu par l'utilisateur, on comprend qu'il est nécessaire de déplacer l'axe 215 de pivotement du doigt de rappel 200 pour éviter toute détérioration d'une pièce au moins intervenant dans la chaîne cinématique des moyens de commande.

De façon connue en soi, cette fonction est assurée par le coulisseau de forçage 300.

En effet, dans ce cas le contact défini entre le tourillon 218 et le flanc 136 de la découpe formée sur l'équipage 100 sert de point d'appui fixe au doigt de rappel 200. La sollicitation du doigt de rappel 200 par la came 510 génère ainsi un couple de pivotement sur le doigt de rappel 200 autour d'un axe matérialisé par le point d'appui du tourillon 218 sur le flanc 136 de la découpe 130. Et à son tour, le tourillon 216 exerce, sur le flanc de la lumière 320 prévue sur le coulisseau 300, un couple de pivotement. Le coulisseau de forçage pivote alors, comme représenté sur la figure 12, autour de l'un des deux axes 313 ou 315 selon la position de l'équipage porte-contact 100.

Ce pivotement du coulisseau de forçage 300 permet un recul du doigt de rappel 200 de sorte que celui-ci échappe à la came 510, pour éviter toute détérioration du système.

Lorsque la came 510 a passé le doigt de rappel 200, le système revient dans la position stable représentée sur la figure 11 si l'utilisateur maintient l'équipage 100 en position forcée stable d'alimentation. En revanche, le système revient dans la position de repos représentée sur la figure 6 si l'utilisateur relache l'équipage porte-contact 100 avant que la came 510 n'ait passé totalement le doigt de rappel 200.

On notera que la disposition des différents éléments composant les moyens de commande conformes à la présente invention est telle que, projetée dans le plan passant par les axes 102 et 500, l'axe 215 du tourillon 216 (qui coïncide avec le point d'appui du doigt 200 sur le coulisseau de forçage 300) est situé entre d'une part les axes de pivotement 313 et 315 du coulisseau de forçage 300 et d'autre part le point d'appui du tourillon 218 sur le secteur 120 de l'équipage 100.

Grâce à cette disposition, lors de la mise en oeuvre de la procédure d'échappement du doigt 200 par pivotement du coulisseau de forçage 300, on obtient un effort résistant sur la came 510 qui décroît rapidement, alors que selon les dispositions de la technique antérieure, cet effort résistant croissait.

Pour comprendre cette avantage, il faut noter que le couple moteur appliqué sur le coulisseau de forçage 300 au cours de cette procédure est égal à X.F1, relation dans laquelle X représente la distance projetée dans le plan passant par les axes 102 et 500 entre l'axe 215 et l'axe 313 ou 315, tandis que F1 représente l'amplitude de l'effort appliqué sur le tourillon 216 résultant de la sollicitation par la came 510 (voir figures 11 et 12).

Par ailleurs, le couple de rappel appliqué sur le coulisseau de forçage 300 est égal à Y.F2 relation dans laquelle Y représente la projection dans un plan perpendiculaire au plan passant par les axes 102 et 500 et parallèle à ces derniers, de la distance séparant le sommet 316 du coulisseau 300 et l'axe 313 ou 315, et F2 représente l'effort exercé sur le coulisseau de forçage 300 par la lame ressort 390 (voir figures 11 et 12).

On comprend en effet que lors de cette procédure d'échappement, ou forçage, le couple moteur X.F1 croît rapidement car le bras de levier X croît, alors que le couple de rappel Y.F2 tend à diminuer car, l'effort F2 de la lame ressort restant sensiblement constant, le bras de levier Y en revanche décroît rapidement.

Ainsi, selon l'invention, l'effort résistant appliqué sur la came 510 est maximum au départ de la procédure de forçage et décroît rapidement, contrairement aux dispositions antérieurement connues.

La structure conforme à la présente invention offre de nombreux avantages.

En particulier, les moyens de commande conformes à l'invention présentent des dimensions radiales réduites.

Contrairement aux systèmes de la technique antérieure, les moyens de commande conformes à la présente invention ne risquent pas d'entraîner un escamotage intempestif du coulisseau de forçage.

Enfin, comme indiqué précédemment, la structure conforme à la présente invention permet de réduire l'effort résistant lors de la procédure de forçage.

## Revendications

1. Commutateur électrique pour l'alimentation des indicateurs de changement de direction d'un véhicule automobile, comprenant :
- un équipage porte-contact (100) associé à un système d'indexation définissant une position de repos et au moins une position stable d'alimentation,
- un doigt de rappel (200) associé à des moyens élastiques (290, 292), déplacé par ceux-ci contre une surface de contrôle (132) de l'équipage (100) entre une position de repos - en position de repos de l'équipage (100)-dans laquelle le doigt de rappel (200) n'interfère pas avec une came (510) liée à l'arbre de direction et une position de travail - en position de travail de l'équipage - dans laquelle le doigt de rappel (200) interfère avec la came (510), de sorte que le doigt de rappel (200) peut sélectivement provoquer le retour de l'équipage porte-contact (100) en position de repos, lorsqu'il est lui-même sollicité par la came (510), et
- un coulisseau de forçage (300) sur lequel le doigt (200) est monté à pivotement et qui est conçu pour déplacer le point de pivotement (215) du doigt de rappel (200) lorsque simultanément la came (510) sollicite le doigt (200) et l'équipage porte-contact (100) est maintenu en position de travail, caractérisé par le fait que le coulisseau de forçage (300) est monté à pivotement sélectivement autour de deux axes (313, 315) symétriques par rapport à un plan médian du coulisseau (300) au repos.

2. Commutateur selon la revendication 1, caractérisé par le fait que le plan médian passe par l'axe (500) de l'arbre de direction et l'axe (102) de pivotement de l'équipage porte-contact (100).

3. Commutateur selon l'une des revendications 1 ou 2, caractérisé par le fait que le plan médian passe par l'axe de pivotement (215) du doigt de rappel (200) sur le coulisseau de forçage (300), en position de repos de ce dernier.

4. Commutateur selon l'une des revendications 1 à 3, caractérisé par le fait que le coulisseau de forçage (300) est adapté pour générer une augmentation du couple moteur (X.F1) sur ce dernier lors de la procédure de forçage.

5. Commutateur selon la revendication 4, caractérisé par le fait que le coulisseau de forçage (300) est adapté pour provoquer une augmentation du bras de levier (X) du couple moteur, lors de la procédure de forçage.

6. Commutateur selon l'une des revendications 1 à 5, caractérisé par le fait que le coulisseau de forçage (300) est adapté pour provoquer une réduction du couple résistant (Y.F2) lors de la procédure de forçage.

7. Commutateur selon la revendication 6, caractérisé par le fait que le coulisseau de forçage (300) est adapté pour provoquer une réduction du bras de levier (Y) lors de la procédure de forçage.

8. Commutateur selon l'une des revendications 1 à 7, caractérisé par le fait que l'équipage porte-contact (100) comprend une découpe pourvue d'une bordure en W (132), le coulisseau de forçage (300) comprend une lumière oblongue (320) et le doigt de rappel (200) comprend un premier tourillon (216) engagé dans la lumière (320) du coulisseau de forçage (300) et un second tourillon (218) en appui contre la bordure en W (132) de l'équipage porte-contact (100).

9. Commutateur selon l'une des revendications 1 à 8, caractérisé par le fait que les moyens élastiques sollicitant le coulisseau de forçage (300) sont formés d'une lame ressort (390).

10. Commutateur selon la revendication 9, caractérisé par le fait que la lame ressort (390) est placée entre le coulisseau de forçage (300) et l'axe (102) de pivotement de l'équipage porte-contact (100).

11. Commutateur selon l'une des revendications 1 à 10, caractérisé par le fait que le boîtier de commutateur (400) définit deux structures d'appui (410, 412), pour le coulisseau de forçage, symétriques par rapport au plan médian et formées de calottes cylindriques concaves en direction de l'axe (102) de pivotement de l'équipage porte-contact (100).

12. Commutateur selon l'une des revendications 1 à 11, caractérisé par le fait que, projeté dans un plan passant par l'axe (102) de pivotement de l'équipage porte-contact et l'axe (500) de l'arbre de direction, l'axe (215) de pivotement du doigt de rappel (200) sur le coulisseau de forçage (300) est compris entre l'axe (313, 315) du coulisseau de forçage (300) sur le boîtier (400) et le point d'appui du doigt de rappel (200) sur l'équipage porte-contact (100).

## Claims

1. An electrical switch for powering change-of-direction indicators of a motor vehicle, the switch comprising:
• a contact-carrier assembly (100) associated with an indexing system defining a rest position and at least one stable power-feeding position:
• a return finger (200) associated with resilient means (290, 292) and displaced thereby over a monitoring surface (132) of the assembly (100) between a rest position when the assembly (100) is in its rest position, with the return finger (200) not interfering with a cam (510) associated with a steering column, and a working position when the assembly is in its working position, in which the return finger (200) interferes with the cam (510) in such a manner that the return finger (200) can selectively cause the contact-carrier assembly (100) to return to the rest position when it is itself urged by the cam (510), and
• a forcing slide (300) on which the finger (200) is pivotally mounted and designed to move the pivot point (215) of the return finger (200) when simultaneously the cam (510) is urging the finger (200) and the contact-carrier assembly (100) is held in the working position, the switch being characterized by the fact that the forcing slide (300) is mounted to pivot selectively about two axes (313, 315) that are symmetrical about a midplane of the slide (300) at rest.

2. A switch according to claim 1, characterized by the fact that the midplane includes the axis (500) of the steering column and the pivot axis (102) of tie contact-carrier assembly (100).

3. A switch according to claim 1 or 2, characterized by the fact that the midplane includes the pivot axis (215) of the return finger (200) on the forcing slide (300) when the forcing slide is in its rest position.

4. A switch according to any one of claims 1 to 3, characterized in that the forcing slide (300) is adopted to generate an increase in the driving torque (X.F1) thereon during the forcing procedure.

5. A switch according to claim 4, characterized by the fact that the forcing slide (300) is adapted to increase the lever arm (X) of the driving torque during the forcing procedure.

6. A switch according to any one of claims 1 to 5, characterized in that the forcing slide (300) is adapted to reduce the opposing torque (Y.F2) during the forcing procedure.

7. A switch according to claim 6, characterized by the fact that the forcing slide (300) is adapted to cause a reduction in the lever arm (Y) during the forcing procedure.

8. A switch according to any one of claims 1 to 7, characterized by the fact that the contact-carrier assembly (100) comprises a cutout provided with a W-shaped border (132), the forcing slide (300) comprising an oblong slot (320), and the return finger (200) comprising a first stud (216) engaged in the slot (320) of the forcing slide (300), and a second stud (218) pressed against the W-shaped border (132) of the contact-carrier assembly (100).

9. A switch according to any one of claims 1 to 8, characterized by the fact that the resilient means urging the forcing slide (300) are constituted by a spring blade (390).

10. A switch according to claim 9, characterized by the fact that the spring blade (390) is placed between the forcing slide (300) and the pivot axis (102) of the contact-carrier assembly (100).

11. A switch according to any one of claims 1 to 10, characterized by the fact that the switch housing (400) defines two bearing structures (410, 412) for the forcing slide, that are symmetrical about the midplane and that are formed by cylindrical caps that are concave towards the pivot axis (102) of the contact-carrier assembly (100).

12. A switch according to any one of claims 1 to 11, characterized by the fact that when projected on a plane including the pivot axis (102) of the contact-carrier assembly and the axis (500) of the steering column, the pivot axis (215) of the return finger (200) on the forcing slide (300) lies between the axis (313, 315) of the forcing slide (300) on the housing (400) and the point where the return finger (200) bears against the contact carrier assembly (100).

## Patentansprüche

1. Elektrischer Schalter zur Versorgung der Fahrtrichtungsanzeiger eines Kraftfahrzeuges mit
einem beweglichen kontakttragenden Element (100), das mit einem Schaltsystem verbunden ist, das eine Ruhestellung und wenigstens eine stabile Versorgungsstellung bestimmt,
einem Rückstellfinger (200), der mit elastischen Einrichtungen (290, 292) verbunden ist und durch diese gegen eine Steuerfläche (132) des beweglichen Elementes (100) zwischen einer Ruhestellung - einer Ruhestellung des beweglichen Elementes (100) -, in der der Rückstellfinger (200) nicht mit einem Nacken (510) in Eingriff steht, der mit der Lenkwelle verbunden ist, und einer Arbeitsstellung - einer Arbeitsstellung des beweglichen Elementes - versetzt wird, in der der Rückstellfinger (200) mit dem Nacken (510) in Eingriff steht, derart, daß der Rückstellfinger (200) wahlweise die Rückstellung des beweglichen kontakttragenden Elementes (100) in die Ruhestellung bewirken kann, wenn er seinerseits durch den Nocken (510) beaufschlagt wird, und
- einem Preßstempel (300), an dem der Finger (200) schwenkbar angebracht ist und der so ausgebildet ist, daß er den Schwenkpunkt (215) des Rückstellfingers (200) versetzt, wenn gleichzeitig der Nocken (510) den Finger (200) beaufschlagt und das bewegliche kontakttragende Element (100) in der Arbeitsstellung gehalten ist, dadurch gekennzeichnet, daß der Preßstempel (300) wahlweise schwenkbar um zwei Achsen (313, 315) angebracht ist, die im Ruhezustand bezüglich einer Mittelebene des Stempels (300) symmetrisch sind.

2. Schalter nach Anspruch 1, dadurch gekennzeichnet, daß die Mittelebene durch die Achse (500) der Lenkwelle und die Schwenkachse (102) des beweglichen kontakttragendan Elementes (100) geht.

3. Schalter nach Anspruch 1 oder 2, dadurch gekennzeichnet, daß die Mittelebene durch die Schwenkachse (215) des Rückstellfingers (200) am Preßstempel (300) geht, wenn sich letzterer in der Ruhestellung befindet.

4. Schalter nach einem der Ansprüche 1 bis 3, dadurch gekennzeichnet, daß der Preßstempel (300) so ausgebildet ist, daß er eine Verstärkung des Motordrehmomentes (X.F1) an letzterem während des Preßvorganges hervorruft.

5. Schalter nach Anspruch 4, dadurch gekennzeichnet, daß der Preßstempel (300) eine Verlängerung des Hebelarmes (X) des Motordrehmomentes während des Preßvorganges hervorruft.

6. Schalter nach einem der Ansprüche 1 bis 5, dadurch gekennzeichnet, daß der Preßstempel (300) so ausgebildet ist, daß er eine Herabsetzung des Widerstandsmomentes (Y.F2) während des Preßvorganges hervorruft.

7. Schalter nach Anspruch 6, dadurch gekennzeichnet, daß der Preßstempel (300) so ausgebildet ist, daß er eine Verkürzung dem Hebelarmes (Y) während des Preßvorganges hervorruft.

8. Schalter nach einem der Ansprüche 1 bis 7, dadurch gekennzeichnet, daß das bewegliche kontakttragende Element (100) einen Ausschnitt mit W-förmigem Rand (132) umfaßt, der Preßstempel (300) ein Langloch (320) umfaßt, und der Rückstellfinger (200) einen ersten Drehzapfen (216), der in das Langloch (320) des Preßstempels (300) eingreift, und einen zweiten Drehzapfen (218) umfaßt, der an dem W-förmigen Rand (132) des beweglichen kontakttragenden Elementes (100) anliegt.

9. Schalter nach einem der Ansprüche 1 bis 8, dadurch gekennzeichnet, daß die elastischen Einrichtungen, die den Preßstempel (300) beaufschlagen, in Form einer Blattfeder (390) ausgebildet sind.

10. Schalter nach Anspruch 9, dadurch gekennzeichnet, daß die Blattfeder (390) zwischen dem Preßstempel (300) und der Schwenkachse (102) des beweglichen kontakttragenden Elementes (100) angeordnet ist.

11. Schalter nach einem der Ansprüche 1 bis 10, dadurch gekennzeichnet, daß das Gehäuse des Schalters (400) zwei Anlagegebilde (410, 412) für den Preßstempel bildet, die bezüglich der Mittelebene symmetrisch sind und konkave zylindrische Bögen in Richtung der Schwenkachse (102) des beweglichen kontakttragenden Elementes (100) bilden.

12. Schalter nach einem der Ansprüche 1 bis 11, dadurch gekennzeichnet, daß projiziert auf eine Ebene, die durch die Schwenkachse (102) des beweglichen kontakttragenden Elementes und durch die Achse (500) der Lenkwelle geht, die Schwenkachse (215) des Rückstellfingers (200) am Preßstempel (300) zwischen der Achse (313, 315) des Preßstempels (300) am Gehäuse (400) und dem Anlagepunkt des Rückstellfingers (200) an dem beweglichen kontakttragenden Element (100) liegt.
